# EUROPEAN PATENT APPLICATION

(11) **EP 2 073 423 A1**
(43) Date of publication of application: **24.06.2009**
(21) Application number: 07024985.9
(22) Date of filing: 21.12.2007
(51) Int. Cl.: H04L 1/18

(54) **Method and device for error detection and handling of received radio link control protocol data units in a mobile radio communication system**

(71) Applicant: Nokia Siemens Networks Oy, 02610 Espoo (FI)
(72) Inventor: Schneider, Simon, 44625 Herne (DE); Ströhlein, Timo, 44625 Herne (DE); Wernet, Daniel, 44789 Bochum (DE)
(74) Representative: Bruglachner, Thomas E.

(57) **Abstract**

The invention relates to a method for error detection and handling of received protocol data units -PDUs - in a mobile radio communication system, wherein a PDU contains one or more segments of one or more service data units - SDUs - and a segment type field in its header, which contains information about the type of the segments contained in the PDU, wherein the method comprises the steps of
- receiving PDUs via a radio link of the mobile radio communication system,
- storing received PDUs in the receiving order,
- determining an erroneous PDU by analyzing the segments contained in two or more stored PDUs, which follow in succession according to a predefined sequence, for errors (S10-S18),
- disregarding a PDU containing an erroneous segment (S20), and
- triggering a retransmission of the disregarded PDU (S22)

## Description

The invention relates to a method for error detection and handling of received protocol data units in a mobile radio communication system according to claim 1 and a corresponding device according to claim 11.

In the next generation mobile network 3GPP LTE (3^{rd} Generation Partnership Project Long Term Evolution), the RLC (Radio Link Control) layer in the receiving direction is responsible to concatenate segments of higher layer data to complete SDUs (Service Data Units) and to transmit these in sequence. This is achieved by storing received PDUs (Protocol Data Units), which were received out of sequence, in a receive buffer. The order of the messages in the receive buffer is given by the RLC sequence number.

The RLC PDU header contains a segment type field, which defines whether a segment is a start, a middle or an end segment of a complete SDU . LTE specifies four different segment types: "start", "middle", "end" and "complete". The segment type "complete" indicates an already complete SDU, which does not require concatenation. A segmented SDU is made up of 1 start + 0...x middle segment(s)+ 1 end segment. The RLC sequence number of a received RLC PDU, the segment type and the number of segments contained in each RLC PDU is used to reassemble a complete SDU.

Due to the nature of the transmission channel in a mobile radio communication system, there exists some probability of out of sequence received messages. Particularly, problems may arise if a RLC PDU is received, where the first segment does not fit to the last segment of previously received PDU, or where last segment of a received PDU does not fit to first segment of the following PDU, since that PDU would not be accepted and thus be dropped. That problem will reoccur, because even that dropped RLC PDU will be retransmitted, because the sender considers that PDU as correct. This might be even true, because the error might have occurred before, i.e. an earlier received PDU was not correct. Unfortunately that problem got only visible, when that new RLC PDU has been received, which does not fit to previously received PDUs.

A problem exists also in that already previous or following PDUs could have been received with undetected coding error. A normal protocol behaviour would be always to drop the last received PDU, which does not fit to the surrounding PDUs. This will trigger the retransmission of that PDU. As this PDU might not be the erroneous PDU, this error will arise again and again. The final protocol handling would trigger the clearing of the whole receiver buffer, either by RLC reset or by executing a move receiver window method. This will result in huge retransmission and therefore as well in degrade of throughput and increased transmit delay.

Therefore, it is an object of the present invention to provide an improved method and device for error detection and handling of received protocol data units -PDUs - in a mobile radio communication system.

This object is achieved by a method for error detection and handling of received protocol data units in a mobile radio communication system with the features of claim 1 and a corresponding device with the features of claim 11. Further embodiments of the invention a subject to the dependent claims.

A basic idea of the invention is to detect erroneous data, which is stored after receipt via a radio link, by analyzing the type of the last or the first segment of a SDU, which is contained in a PDU, for at least two successively stored PDUs and to handle detected erroneous data by triggering a retransmission of the PDU containing the detected erroneous data. Thus, an efficient process of error detection and handling may be implemented, particularly since the triggering of retransmissions of data may be better adapted to the occurrence of erroneous data in the stored data. This allows to clear a receive buffer from erroneous data. Also, the number of retransmitted PDUs can be minimized, since the error detection is improved in contrast to the current method for triggering a retransmission of PDUs as described in the introductory part. The invention may result in higher throughput and lower transmit delay compared to the methods, described in the introductory part, for triggering retransmissions.

According to an embodiment of the invention, a method for error detection and handling of received protocol data units
- PDUs - in a mobile radio communication system is provided, wherein a PDU contains one or more segments of one or more service data units - SDUs - and a segment type field in its header, which contains information about the type of the segments contained in the PDU, wherein the method comprises the steps of
- receiving PDUs via a radio link of the mobile radio communication system,
- storing received PDUs in the receiving order,
- determining an erroneous PDU by analyzing the segments contained in two or more stored PDUs, which follow in succession according to a predefined sequence, for errors,
- disregarding a PDU containing an erroneous segment, and
- triggering a retransmission of the disregarded PDU.

By analyzing the segments contained in two or more stored PDUs, which follow in succession according to the predefined sequence, for errors, it is possible to detect more precisely an erroneous PDU and the handle the detected erroneous PDU more efficiently. Also, it is possible to more precisely detect an erroneous PDU in the predefined sequence of PDUs, instead of detecting a received PDU as being erroneous without taking the preceding and succeeding PDUs of the predefined sequence into account. It should be noted that the receiving order is not necessarily the predefined sequence of the PDUs, even if the receiving order may be identical with the predefined sequence. For example, depending on the quality of a transmission channel, PDUs may be received out of the predefined sequence, thus resulting in a receiving order, which differs from the predefined sequence. The predefined sequence is essential for reassembling a complete SDU out of the segments contained in received PDUs.

According to an embodiment of the invention, the analyzing of the segments may comprise comparing the type of the last segment in a first PDU with the type of the first segment in a second PDU, which follows the first PDU in the predefined sequence. Since each PDU contains a segment type field in its header, the comparison may be implemented by reading the segment type field of a PDU and processing the read segment type field with read segment type fields of other preceding or succeeding PDUs.

The determining of an erroneous PDU comprises in an embodiment of the invention determining the first PDU as being an erroneous PDU depending on the result of the comparison. For example, for each PDU its segment type may be compared to the segment type the PDU, following the PDU to be examined in a certain sequence.

The types of a segment may in an embodiment of the invention comprise "start", "middle", "end" and "complete", particularly defining the part of a segment in a SDU, which is made up a "first", one or more "middle" and one "end" segment; the type "complete" signals a complete SDU. The first PDU is then determined as being an erroneous PDU, if the comparison of the segment types results in one of the following:
the type of the last segment in the first PDU is "start" and the type of the first segment in the second PDU is "start" or "complete";
the type of the last segment in the first PDU is "middle" and the type of the first segment in the second PDU is "start" or "complete";
the type of the last segment in the first PDU is "end" and the type of the first segment in the second PDU is "middle" or "end";
the type of the last segment in the first PDU is "complete" and the type of the first segment in the second PDU is "middle" or "end".

The above listed comparison results demonstrate that the type of the last segment in the first PDU does not match with the type of the first segment of the second PDU and, thus, cannot be used to complete a SDU. This indication may then be used for determining the first PDU as being erroneous and to trigger a retransmission of this PDU.

The disregarding of a PDU containing an erroneous segment may comprise removing the disregarded PDU from a storage, according to an embodiment of the invention. This allows to remove erroneous PDUs from for example a receive buffer and to keep the buffer small.

In a further embodiment of the invention, also one or more preceding and succeeding PDUs of the disregarded PDU may be disregarded, if the disregarded PDU was already retransmitted, and retransmissions of the disregarded one or more preceding and/or succeeding PDUs, respectively may be triggered. For example, it may occur that a disregarded PDU was not erroneous, but determined as erroneous instead of an erroneous preceding or succeeding PDU. Thus, if a retransmitted PDU is determined as erroneous a second time, this may indicate that not the retransmitted PDU was erroneous, but a preceding or succeeding PDU. By also disregarding the latter PDUs and triggering a retransmission, the likelihood of wrongly determining a PDU as being erroneous may be reduced.

According to a further embodiment of the invention, the received PDUs may be PDUs of the radio link control - RLC - layer of a protocol stack of the mobile radio communication system, for example a mobile radio communication system according to 3GPP-LTE.

In a further embodiment of the invention, each received PDU may contain a RLC sequence number in its header and the RLC sequence number may determine the predefined sequence of the received PDUs. Thus, by analyzing the RLC sequence numbers of the received PDUs, the predefined sequence may be determined.

According to a further embodiment of the invention, a computer program is provided, wherein the computer program may be enabled to carry out the method according to the invention when executed by a computer.

According to an embodiment of the invention, a record carrier such as a CD-ROM, DVD, memory card, floppy disk or similar storage medium may be provided for storing a computer program according to the invention.

A further embodiment of the invention relates to a device for error detection and handling of received protocol data units
- PDUs - in a mobile radio communication system, wherein a PDU contains one or more segments of one or more service data units - SDUs - and a segment type field in its header, which contains information about the type of the segments contained in the PDU, wherein the device comprises
- a receiver for receiving PDUs via a radio link of the mobile radio communication system,
- a storage for storing received PDUs in the receiving order, and
- error detection and handling means being adapted for determining an erroneous PDU by analyzing the segments contained in the stored PDUs for errors, for disregarding a PDU containing an erroneous segment, and for triggering a retransmission of the disregarded PDU.

The error detection and handling means may be for example implemented by a dedicated processor, executing a software which is adapted to perform the error detection and handling.

Particularly, the device may be adapted to perform a method according to the invention and as described above.

Finally, an embodiment of the invention relates to a mobile radio device, particularly a mobile radio terminal or a base station, comprising one or more devices of the invention and as described above.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.
Fig. 1 shows a flowchart of an embodiment of a for error detection and handling of received PDUs in a mobile radio communication system according to the invention;
Fig. 2 shows an overview of the protocol structure of a RLC SDU and PDU in a mobile radio communication system;
Fig. 3 shows the structure of a RLC PDU and of its header;
Fig. 4 shows a table containing different comparison results of the type of the last segment in a current PDU n and a previous PDU n-1, which result in an error according to the invention;
Fig. 5 shows a table containing different comparison results of the type of the last segment in a current PDU n and a next PDU n+1 which result in an error according to the invention;
Fig. 6 shows a block diagram of an embodiment of a device for error detection and handling of received PDUs in a mobile radio communication system according the invention.

In the following, functional similar or identical elements may be denoted with the same reference numerals.

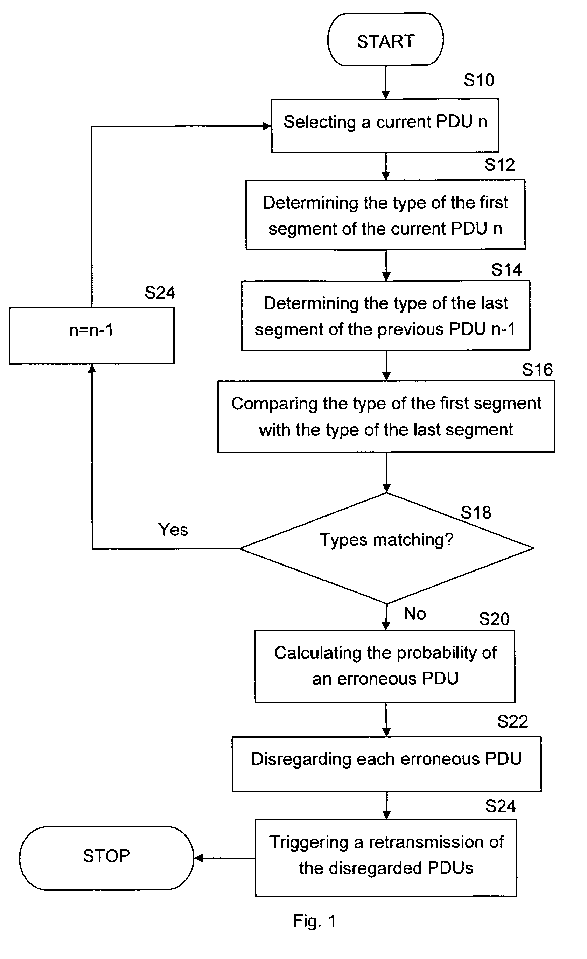

Fig. 1 shows a flowchart of an algorithm, which may be implemented in a mobile radio receiver, such as a mobile radio terminal or a base station of a mobile communication system. The algorithm may be used to clear the receive buffer of erroneous RLC PDUs, thus allowing to minimize the required number of retransmitted PDUs. This may result in higher throughput and lower transmit delay compared to the solution, described in the introductory part. The algorithm may work in such way, that the potential erroneous area of PDUs in the receive buffer would be gradually increased.

The algorithm starts with step S10, during which a stored PDU n is selected as the current PDU. For example, the last received PDU may be selected as current PDU. In this case, the algorithm may be applied to step through all of the stored and previously received RLC PDUs.

In the following step S12, the segment type field of the current PDU n may be analyzed in order to determine the type of the first segment of the current PDU n. In the following step S14, the segment type field of the previously stored PDU n-1 is analyzed in order to determine the type of the last segment of the previously stored PDU n-1. Previously stored PDU means that the previous PDU n-1 is the previous PDU in a predetermined sequence, determined by the RLC sequence number contained in each PDU, as will be explained later. Similarily, next stored PDU means that the next PDU n+1 is the next PDU in a predetermined sequence, determined by the RLC sequence number contained in each PDU, as will be explained later.

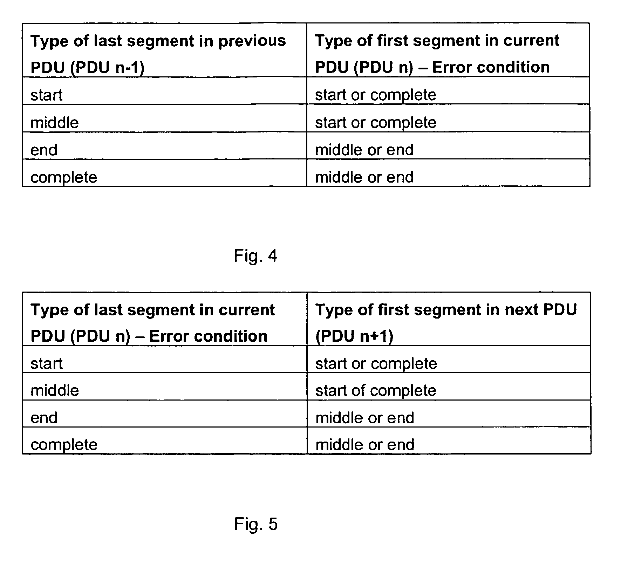

In step S16, the type of the first segment of the current PDU n is compared with the type of the last segment of the previously stored PDU n-1. The following criteria may be used to detect erroneous segments by comparing the type of the first segment of the current PDU n with the type of the last segment of the previous PDU n-1: if the last segment of the previous PDU n-1 is a start segment of a SDU, and the first segment of the current PDU n is either the start or the complete segment of a SDU, this would be considered as an error. Here either the previous PDU could have been coded wrong or are altered during transmission or current PDU is coded wrong. The table in Fig. 4 lists the different comparison cases for error conditions, i.e. the cases, which result in a mismatch of the types of the segments and, therefore, lead to a disregarding of the current PDU n.

In step S18, the comparison result is analyzed whether the compared segment types match or not. If the types match, for example when the last segment of the previous PDU n-1 is "middle" and the type of the first segment of the current PDU n is "end", the method proceeds with the previous PDU in the predefined sequence in step S24 by decreasing the PDU index n by 1. Thus, the previous PDU n-1 will be the current PDU n in the method proceeds with the steps S10 to S18 as described above.

However, if the segment types do not match, for example for one of the cases listed in the table shown in Fig. 4, the probability of an erroneous PDU is calculated in step S20, as it is explained below in more detail. If for example the calculation results in that the probability of an erroneous previous PDU n-1 is nearly the same as the probability of an erroneous current PDU n, then both PDUs shall be dropped or disregarded, respectively.

The probability calculation may be performed as follows:

First, the current PDU n may be compared with the previous PDU n-1. During this comparison, it is checked if the PDU n-2, i.e. the PDU before the previous PDU n-1 in the predefined sequence, has been received already. If the PDU n-2 has been received, then the previous PDU n-1 has a higher probability of being correct than the current PDU n. Otherwise, the current PDU n and the previous PDU n-1 have the same probability of being correct, i.e. the current PDU n and the previous PDU n-1 shall be dropped in step S22 and a retransmission of the dropped PDUs is triggered in the next step S24. The method may then be performed again when the retransmitted PDUs were received.

Secondly, the next PDU n+1 is compared with the current PDU n. During this comparison, it is checked if the PDU n+2, i.e. the PDU after the next PDU n+1, has been received already. If the PDU n+2 has been received, then the next PDU n+1 has a higher probability of being correct than the current PDU n. Otherwise, the current PDU n and the next PDU n+1 have the same probability of being correct, i.e. current PDU n and the next PDU n+1 shall be dropped in step S22 and a retransmission of the dropped PDUs is triggered in the next step S24. The method may then be performed again when the retransmitted PDUs were received..

Fig. 5 shows a table with comparison cases listed for the last segment of the current PDU n and the first segment of the next PDU n+1. Common in both types of comparisons described above is that always last segment of earlier PDU is compared with first segment of next PDU (i.e. either PDU n vs. PDU n+1 or PDU n-1 vs. PDU n).

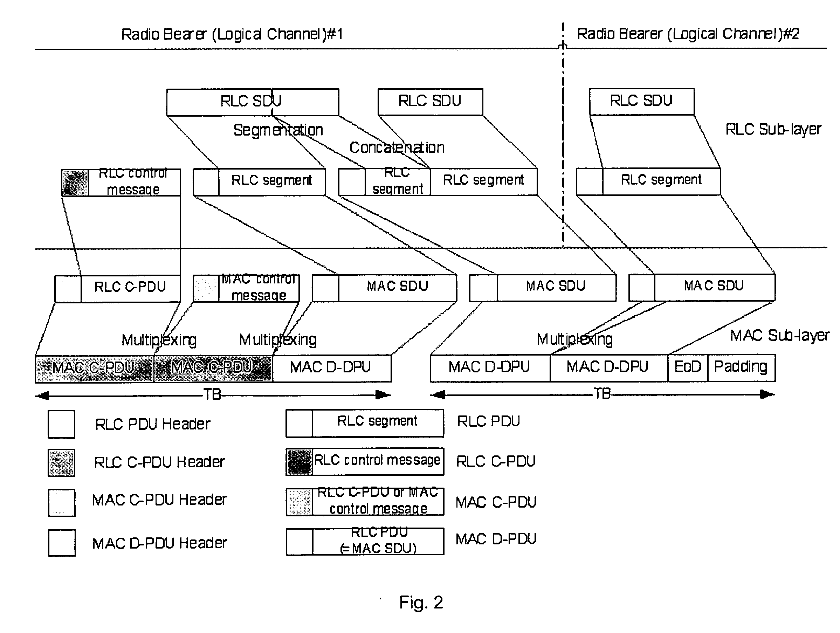

As mentioned above, the received RLC PDUs are used to reassemble SDUs. This reassembling is shown in Fig. 2, which shows the MAC sub-layer and the RLC sub-layer of the protocol stack of the communication protocol in 3GPP-LTE. The MAC sub-layer comprises two different PDUs: the MAC C-PDU and the MAC D-PDU. The MAC D-PDUs are used to reassemble in the MAC sub-layer MAC SDUs, while the MAC C-PDUs are provided for reassembling MAC control messages and RLC C-PDUs. The reassembling is performed by some multiplexing of the received MAC C-PDUs and MAC D-PDUs as indicated in Fig. 2. In the RLC sub-layer, the MAC SDUs are used to reassemble RLC PDUs, which contain the MAC SDUs as segments of the RLC SDUs. Finally, the RLC SDUs are formed by concatenating the RLS segments according to a predefined sequence, which is defined by the RLC sequence number.

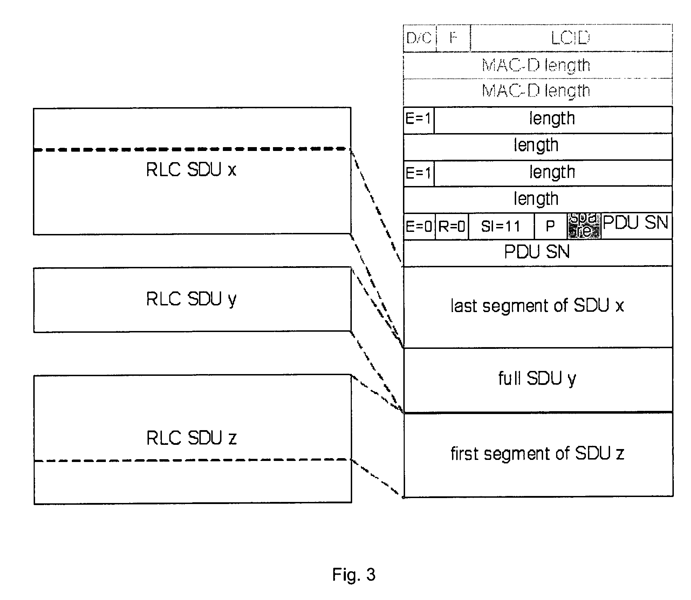

Fig. 3 shows the structure of a RLC PDU header, which contains a segment information field SI, which contains the bits 11 and a RLC sequence number, denoted with PDU SN. The payload of the shown RLC PDU contains the last segment of a SDU x, the entire SDU y, and the first segment of a SDU z.

In the following, further scenarios for error detection and handling according to the invention are explained.

### Scenario 1: Previous PDU n-1 in receive buffer does not fit current PDU n

Here the probability is higher that the current PDU n is the erroneous PDU. I.e. in first step this PDU would be discarded. The probability is higher, because the previous PDU n-1 lower boundary has matched before, i.e. the previous PDU n-1 compared with the further previous PDU-1, i.e. PDU n-2 has matched already.

In case receiver would receive a second time the same erroneous current PDU n, the previous PDU n-1 could be discarded in a next step. As an optimization the current PDU n could be kept in receive buffer.

If that same previous PDU n-1 would be received again, then even older, .i.e. further previous PDUs, e.g. PDU n-2, could be dropped from the receive buffer and triggered for retransmission. The so implemented loop would finally terminate, either by an empty receive buffer or by the peer entity triggering a move receiving window procedure or a RLC reset procedure.

### Scenario 2: Next PDU n+1 in receiver buffer does not fit current PDU n

Here the error probability of the next PDU n+1 can be evaluated by analyzing the further next PDU n+2 after the next PDU n+1 (if available). If the PDU n+2 is available, then the error probability is higher that the current PDU n is erroneous. I.e. in a first step that PDU n shall be dropped. If the PDU n+2 does not exist, the same probability do exists for current PDU n and PDU n+1. I.e. the current PDU n can be dropped here as well. Next steps can be seen analogue to the scenario 1.

### Scenario 3: Previous and next PDU n-1 and n+1, respectively, in receiver buffer do not fit current PDU

Here is the highest error probability for the current PDU n, because of two non matching boundaries. I.e. the current PDU n shall be removed in a first step. In case that the same PDU will be retransmitted, then current and 1^{st} previous and 1^{st} next PDU shall be removed. Next steps can be seen analogue to the scenario 1 and 2. I.e. the area around the erroneous PDU will be increased gradually.

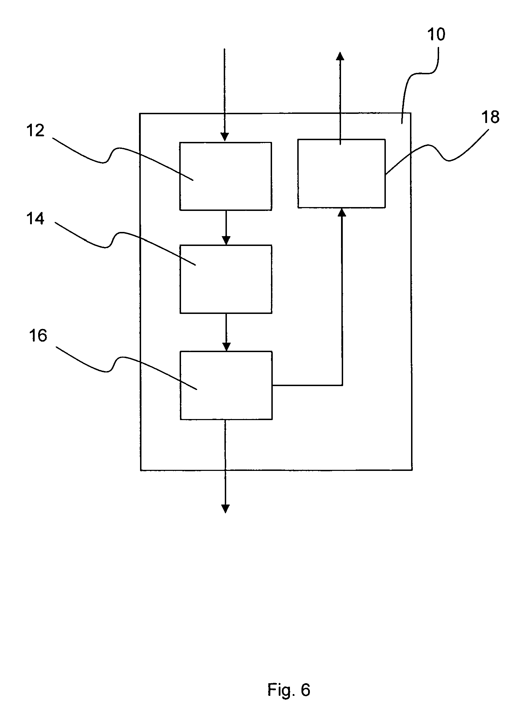

Fig. 6 shows a block diagram of a device 10 for error detection and handling of received PDUs in a mobile radio communication system. The device 10 may be for example implemented in hardware, for example as integrated circuit or a module of an integrated circuit, and applied in mobile radio communication terminals such as mobile phones or mobile radio data transmission devices, or a base station. The device 10 comprises a storage 14 (receive buffer), in which RLC PDUs, received via a radio link from a receiver 12 of the device, are stored in the receiving order, which is not necessarily the required order or predefined sequence for reassembling the SDUs for further processing. As described above, the predefined sequence is usually determined by the RLC sequence number, contained in the header of the RLC PDUs (refer also to the structure of a RLC PDU header shown in Fig. 3). Error detection and handling means 16 are provided for detecting erroneous RLC PDUs in the storage 14 and to trigger are retransmission of erroneous RLC PDUs via a sender 18. The means 16 are adapted for performing a method as shown in Fig. 1 and may be for example by a processing unit with a memory containing an executable code which implements the method shown in Fig. 1 and as described above.

### List of abbreviations

- 3GPP: 3^{rd} Generation Partnership Project
- LTE: Long Term Evolution
- MAC: Media Access Control
- PDU: Protocol Data Unit
- RLC: Radio Link Control
- RRC: Radio Resource Control
- SDU: Service Data Unit

## Claims

1. A method for error detection and handling of received protocol data units -PDUs - in a mobile radio communication system, wherein a PDU contains one or more segments of one or more service data units - SDUs - and a segment type field in its header, which contains information about the type of the segments contained in the PDU, wherein the method comprises the steps of
- receiving PDUs via a radio link of the mobile radio communication system,
- storing received PDUs in the receiving order,
- determining an erroneous PDU by analyzing the segments contained in two or more stored PDUs, which follow in succession according to a predefined sequence, for errors (S10-S20),
- disregarding a PDU containing an erroneous segment (S22), and
- triggering a retransmission of the disregarded PDU (S24).

2. The method of claim 1, wherein the analyzing of the segments comprises comparing the type of the last segment in a first PDU with the type of the first segment in a second PDU, which follows the first PDU in the predefined sequence (S12-S18).

3. The method of claim 2, wherein the determining of an erroneous PDU comprises determining the first PDU as being an erroneous PDU depending on the result of the comparison.

4. The method of claim 3, wherein the types of a segment comprises "start", "middle", "end" and "complete" and the first PDU is determined as being an erroneous PDU, if the comparison results is one of the following:
the type of the last segment in the first PDU is "start" and the type of the first segment in the second PDU is "start" or "complete";
the type of the last segment in the first PDU is "middle" and the type of the first segment in the second PDU is "start" or "complete";
the type of the last segment in the first PDU is "end" and the type of the first segment in the second PDU is "middle" or "end";
the type of the last segment in the first PDU is "complete" and the type of the first segment in the second PDU is "middle" or "end".

5. The method of any of the preceding claims, wherein the disregarding of a PDU containing an erroneous segment comprises removing the disregarded PDU from a storage.

6. The method of any of the preceding claims, further comprising
disregarding also one or more preceding and/or succeeding PDUs of the disregarded PDU, if the disregarded PDU was already retransmitted, and triggering retransmissions of the disregarded one or more preceding and/or succeeding PDUs, respectively.

7. The method of any of the preceding claims, wherein the received PDUs are PDUs of the radio link control - RLC - layer of a protocol stack of the mobile radio communication system.

8. The method of claim 7, wherein each received PDU contains a RLC sequence number in its header and the RLC sequence number determines the predefined sequence of the received PDUs.

9. A computer program enabled to carry out at least a part of the method according to any of the preceding claims when executed by a computer.

10. A record carrier storing a computer program according to claim 9.

11. A device (10) for error detection and handling of received protocol data units -PDUs - in a mobile radio communication system, wherein a PDU contains one or more segments of one or more service data units - SDUs - and a segment type field in its header, which contains information about the type of the segments contained in the PDU, wherein the device comprises
- a receiver (12) for receiving PDUs via a radio link of the mobile radio communication system,
- a storage (14) for storing received PDUs in the receiving order, and
- error detection and handling means (16) being adapted for determining an erroneous PDU by analyzing the segments contained in the stored PDUs for errors, for disregarding a PDU containing an erroneous segment, and for triggering a retransmission of the disregarded PDU.

12. The device of claim 11, being adapted to perform a method of any of the claims 1 to 8.

13. A mobile radio device, particularly a mobile radio terminal or a base station, comprising one or more devices of claim 11 or 12.
